(19) **Europäisches Patentamt**

**European Patent Office**

**Office européen des brevets**

(11) **EP 1 092 129 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(21) Anmeldenummer: **99939921.5**

(22) Anmeldetag: **21.06.1999**

(51) Int Cl.$^7$: **G01C 25/00**

(86) Internationale Anmeldenummer:
**PCT/DE1999/001810**

(87) Internationale Veröffentlichungsnummer:
**WO 2000/000787 (06.01.2000 Gazette 2000/01)**

(54) **VERFAHREN ZUM KALIBRIEREN EINES WINKELSENSORS UND NAVIGATIONSSYSTEM MIT WINKELSENSOR**

METHOD FOR CALIBRATING AN ANGLE SENSOR AND NAVIGATION SYSTEM WITH AN ANGLE SENSOR

PROCEDE D'ETALONNAGE D'UN CAPTEUR D'ANGLE, ET SYSTEME DE NAVIGATION POURVU D'UN CAPTEUR D'ANGLE

(84) Benannte Vertragsstaaten:
**DE FR GB IT NL**

(30) Priorität: **29.06.1998 DE 19828944**

(43) Veröffentlichungstag der Anmeldung:
**18.04.2001 Patentblatt 2001/16**

(73) Patentinhaber: **SIEMENS AKTIENGESELLSCHAFT 80333 München (DE)**

(72) Erfinder: **SCHUPFNER, Markus D-93051 Regensburg (DE)**

(56) Entgegenhaltungen:
**GB-A- 2 255 821      US-A- 5 297 028
US-A- 5 527 003**

**Beschreibung**

Die Erfindung betrifft ein Verfahren zum Kalibrieren eines von der Betriebstemperatur beeinflußten Winkelsensors und ein Navigationssystem mit einem Winkelsensor.

Insbesondere kostengünstige Gyroskope, die in Navigationssystemen eingesetzt werden, zeichnen sich durch temperaturabhängige Meßwerte aus. Das Ausgangssignal für eine Winkeländerung von 0° pro Zeiteinheit (Nullage) kann während einer Fahrt auf Grund der temperaturabhängigen Messung starken Schwankungen unterliegen. Das Temperaturverhalten von Gyroskopen ist individuell und läßt sich nicht allgemein für einen bestimmten Typ von Gyroskop definieren.

Aus der Patentschrift US 5,527,003 ist ein Navigationssystem für Flugzeuge bekannt, bei dem das Temperaturverhalten eines Gyroskops bei der Richtungsmessung berücksichtigt wird. Während sich das Flugzeug in einer anfänglichen Ausrichtung am Boden befindet, wird ein Satz von Richtungsfehlern für die zugehörigen Temperaturen ermittelt. Anschließend wird die Richtung des Flugzeugs geändert und Richtungsfehler werden wiederum ermittelt und von den anfänglichen Werten abgezogen, um temperaturbezogene Werte zu erhalten. Die Werte werden entsprechend ursprünglich festgelegten Temperaturwerten interpoliert.

Die Patentanmeldung GB 301437 A betrifft die Kompensation von Temperaturfehlern bei einem Gyroskop. Hierzu wird ein Skalierungsfaktor als Funktion der Temperatur bestimmt. Die Skalierung für eine bestimmte Temperatur wird ausgehend von einer Referenztemperatur berechnet.

Aus der Patentschrift US 5,394,333 ist bekannt, separate Korrekturfaktoren für eine Position zu bestimmen, die mit einem GPS-Sensor und mit Koppelnavigationssensoren bestimmt worden ist. Als Maß für den Korrekturfaktor dient die Entfernung zwischen der gemessenen Position und der entsprechenden wahrscheinlichen Position auf einer digitalen Straßenkarte. Das System verwendet entweder die mittels dem GPS-Sensor oder die mittels Koppelnavigation ermittelte Position in Abhängigkeit davon, welcher der beiden Werte den geringeren Korrekturfaktor aufweist. Jedoch ist das GPS-Signal nicht an allen Orten verfügbar oder es ist nicht unverfälscht verfügbar. Wird die Richtung der Fortbewegung mit einem Winkelsensor gemessen, der temperaturbedingte Fehler aufweist, so wird die Meßgenauigkeit durch eine sich ändernde Betriebstemperatur des Winkelsensors unter Umständen erheblich beeinflußt.

Aus der Patentschrift US 5,297,028 ist bekannt, die Nullage eines Winkelsensors für eine Vielzahl von Betriebstemperaturen zu messen und zu speichern. Mit den Meßwerten wird die Temperaturdrift des Winkelsensors korrigiert. Fehlt in einem Speicherplatz ein Meßwert, so werden zwei benachbarte, gespeicherte Werte interpoliert.

Es ist ein Ziel der Erfindung, ein Verfahren zum Kalibrieren eines von der Betriebstemperatur beeinflußten Winkelsensors und ein Navigationssystem mit einem solchen Winkelsensor bereitzustellen, bei denen ein Temperaturgang des Winkelsensors individuell berücksichtigt wird.

Dieses Ziel wird mit einem Verfahren und einem Navigationssystem erreicht, wie sie in den unabhängigen Patentansprüchen definiert sind. Vorteilhafte Weiterbildungen der Erfindung sind in den Unteransprüchen angegeben.

Die Nullage eines Gyroskops (Gyro-Zero Point) oder Drehratensensors läßt sich feststellen, wenn keine Bewegung erfolgt, beispielsweise bei einem Stillstand eines Fahrzeugs, oder durch Meßwerte anderer Sensoren, beispielsweise einem GPS-Empfänger und/oder differenziellen Radsensoren. Zusätzlich zum Ausgangssignal des Gyroskops für die Nullage wird die Betriebstemperatur des Winkelsensors mittelbar oder unmittelbar gemessen. Das Ausgangssignal für die Nullage wird abgespeichert und einer bestimmten Temperatur zugeordnet.

Über eine längere Betriebsdauer mit Änderungen der Betriebstemperatur des Winkelsensors werden für eine Vielzahl von Temperaturen die jeweiligen Ausgangssignale für die Nullage gespeichert. Die gespeicherten Werte stehen dann zur Verfügung, um den Winkelsensor für eine bestimmte Betriebstemperatur zu eichen oder zu kalibrieren.

Vorzugsweise werden Referenzsignale für die Nullage für vordefinierte Temperaturen gespeichert. Beim Abspeichern eines Ausgangssignals für eine gemessene Betriebstemperatur wird dann der Wert für zwei im Speicher enthaltene, vordefinierte Temperaturen extrapoliert. Umgekehrt wird beim Laden eines Werts für die Nullage aus zwei Werten, die für vordefinierte Temperaturen abgespeichert sind, die der Betriebstemperatur am nächsten kommen, ein Wert interpoliert. Auf diese Weise wird trotz einer begrenzten Zahl von gespeicherten Werten eine sehr hohe Genauigkeit erzielt.

In einer besonders bevorzugten Ausführungsform wird festgehalten, wie oft ein Ausgangssignal für eine Nullage für eine bestimmte Temperatur abgespeichert worden ist. In diesem Fall geht bei der Neuberechnung eines Referenzsignals für diese Temperatur der abgespeicherte Wert gegenüber einem extern bestimmten Wert um so stärker ein, je öfter der Wert für die Temperatur schon abgespeichert war. Aus der Häufigkeit der Speicheroperationen für eine bestimmte Temperatur wird auf die Genauigkeit des Werts geschlossen. Eine neuere, eventuell ungenauere Messung der Nullage geht daher nur begrenzt in die Bildung eines neuen Referenzsignals ein.

Um eine Alterung des Winkelsensors berücksichtigen zu können, wird der Einfluß eines abgespeicherten Wertes auf die Bildung eines neuen Referenzwerts für die Nullage begrenzt. Vorzugsweise kann auch bei unendlich vielen Speicheroperationen der Einfluß eines für eine bestimmte Temperatur gespeicherten Ausgangssignals bei der Bildung eines neuen Referenzsignals für die Nullage nicht größer als 70 bis 90 % werden.

Weitere Vorteile, Merkmale und Anwendungsmöglichkeiten der Erfindung ergeben sich aus der Beschreibung eines bevorzugten Ausführungsbeispiels in Verbindung mit den Zeichnungen. Es zeigen:

Figur 1     ein Navigationssystem mit Winkelsensor, und
Figur 2     ein Ablaufdiagramm.

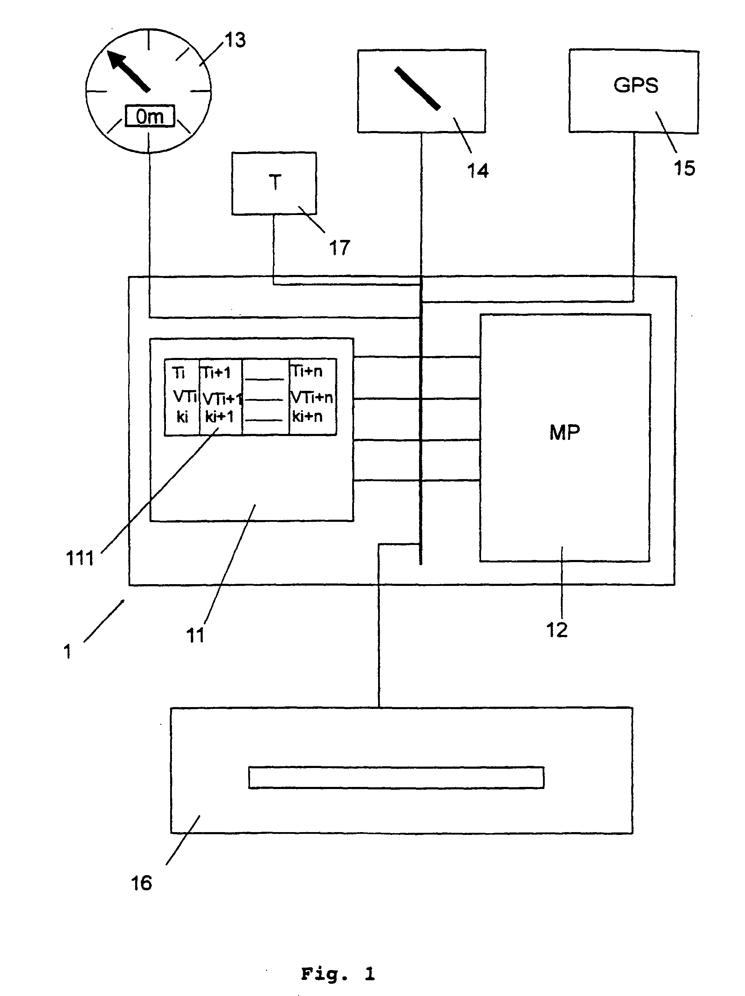

Das in Figur 1 dargestellte Navigationssystem 1 ist in einem Landfahrzeug eingebaut. Es weist einen nichtflüchtigen Arbeitsspeicher 11 auf, bei dem es sich um Flash-Ram handelt.

In dem Arbeitsspeicher 11 sind eine Vielzahl von Temperaturwerten $T_i$ bis $T_{i+n}$ gespeichert. Der niedrigste Temperaturwert im Arbeitsspeicher beträgt -30°C, der höchste Temperaturwert beträgt +80°C. Der Abstand von benachbarten Temperaturwerten $T_i$ und $T_{i+1}$ beträgt 5°C.

Zu jedem Temperaturwert $T_i$ bis $T_{i+n}$ ist ein Referenzsignal $V_{Ti}$ bis $V_{ti+n}$ für die Nullage eines Winkelsensors 14 gespeichert. Der Winkelsensor 14 ist ein Gyroskop, das die Änderung einer Winkelgeschwindigkeit mit Hilfe eines Piezo-Kristalls mißt. Zusätzlich ist für jedes der Referenzsignale $V_{Ti}$ bis $V_{ti+n}$, bei denen es sich um Spannungswerte handelt, eine Zahl $k_i$ bis $k_{i+n}$ gespeichert. Diese Zahl repräsentiert die Anzahl der Speicheroperationen, mit denen bei der betreffenden Temperatur ein neues Referenzsignal $V_{Tn}$ abgespeichert wurde.

Bei der Herstellung des Navigationsgeräts wird bei jeder der in der Tabelle 111 vorhandenen Temperaturen ein Standard-Referenzsignal gespeichert. Dieses kann für alle Temperaturen gleich sein. Die Zahlen $k_i$ bis $k_{i+n}$ werden jeweils auf den Wert Null gesetzt.

Ein Mikroprozessor 12 ist über einen Systembus mit dem Arbeitsspeicher 11, mit einem Entfernungsmesser 13, bei dem es sich um einen Kilometerzähler handelt, den Winkelsensor 14 und einen Absolutpositionssensor 15, bei dem es sich um einen GPS-Empfänger handelt, sowie mit einem Massenspeicher 16, bei dem es sich um ein CD-ROM-Laufwerk handelt, verbunden.

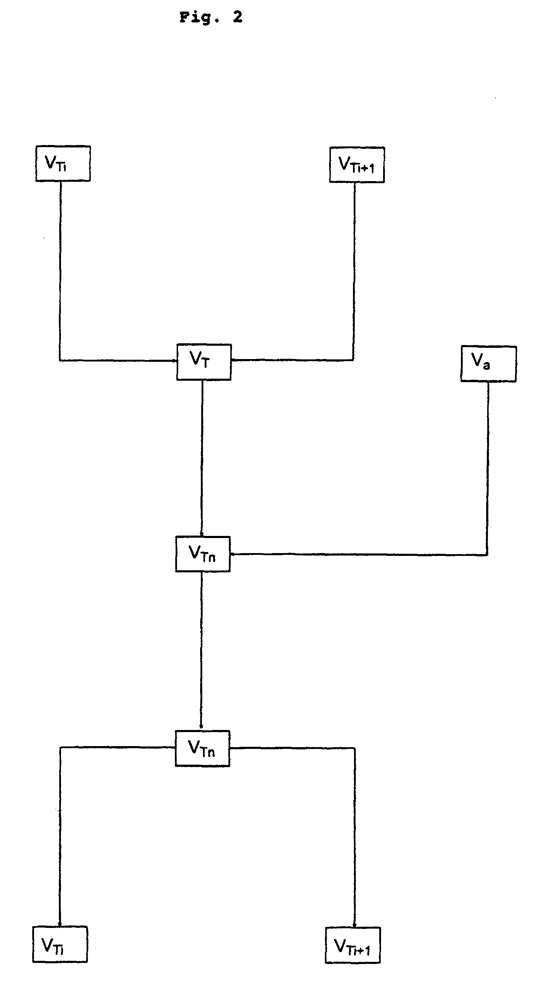

In Figur 2 sind die vom Mikroprozessor 12 durchzuführenden Operationen dargestellt, die dazu führen, daß für den Winkelsensor 14, ausgehend von Standardwerten, die nicht auf die Eigenschaften des individuellen Winkelsensors abgestimmt sind, zu jeder der gespeicherten Temperaturen eine für diese Temperatur und diesen Winkelsensor charakteristisches Referenzsignal der Nullage gespeichert wird.

Für eine vom Temperatursensor gemessene Betriebstemperatur T werden im Arbeitsspeicher diejenigen Temperaturwerte gesucht, die der Betriebstemperatur T am nächsten sind. Dies sind eine Temperatur $T_i$ die kleiner als die Betriebstemperatur T ist, und eine Temperatur $T_{i+1}$, die gößer als die Betriebstemperatur T ist.

Für eine gemessene Betriebstemperatur von 17,1°C wird in der Tabelle des Arbeitsspeichers eine Temperatur von 15°C und eine Temperatur von 20°C gefunden.

Die zu diesen Temperaturwerten gehörigen Referenzsignale $V_{Ti}$ und $V_{ti+1}$ werden aus der Tabelle des Arbeitsspeichers ausgelesen. Für die Temperatur $T_i$ von 15°C ist ein Wert $V_{Ti}$ von 2,50 Volt und für die Temperatur $T_{i+1}$ von 20°C ein Wert $V_{ti+1}$ von 2.56 Volt gespeichert.

Hieraus wird ein interpoliertes Referenzsignal $V_T$ für die gemessene Temperatur von 17,1°C bestimmt nach der Formel:

$$V_T = a * V_{Ti} + b * V_{Ti+1},$$

wobei

$$b \equiv \left( \frac{T - T_i}{T_{i+1} - T_i} \right)$$

und

$$a = 1 - b.$$

Somit ergibt sich für b ein Wert von 0,42, für a ein Wert von 0,58 und für V- ein Wert von 2,53 Volt.

Dieses Referenzsignal $V_T$ für einen Winkel von 0° wird unmittelbar zur Skalierung des Winkelsensors eingesetzt, wenn kein anderes Ausgangssignal für die Nullage verfügbar ist.

Wenn dagegen ein zusätzliches Ausgangssignal $V_a$ verfügbar ist, wird ein neues Referenzsignal für diese gemessene Betriebstemperatur T von 17,1° C gebildet, für die Skalierung des Winkelsensors eingesetzt und in den Arbeitsspeicher gespeichert. Im folgenden wird davon ausgegangen, daß von dem GPS-Empfänger eine Fahrt auf gerader Strecke festgestellt wurde und das vom Winkelsensor gemessene Signal $V_a$ 2,58 Volt beträgt.

Da weder das Ausgangssignal $V_a$ noch das aus dem Arbeitsspeicher gewonnene Referenzsignal $V_T$ eine absolute Genauigkeit beanspruchen können, wird ein neues Referenzsignal $V_{Tn}$ aus beiden Größen gewonnen. Hierzu werden die Signale $V_a$ und $V_T$ im Verhältnis zueinander gewichtet. Hierbei wird davon ausgegangen, daß das aus dem Arbeitsspeicher gewonnene Signal $V_T$ um so genauer ist, je öfter es bereits berechnet und in den Speicher zurückgespeichert worden ist. In ähnlicherweise kann berücksichtigt werden, wenn zur Bildung des Ausgangssignals $V_a$ eine Mehrzahl von Messungen durchgeführt worden ist.

Im Ausführungsbeispiel betrage bei der Temperatur $T_i$ von 15°C die Zahl der bereits erfolgten Abspeicherungen $k_i = 25$ und die Zahl der Abspeicherungen bei der Temperatur $T_{i+1}$ von 20°C betrage $k_{i+1} = 30$. Hieraus ergibt sich für die Formel

$$k = a * k_i + b * k_{i+1}$$

mit den oben bestimmten Werten für a und b die Zahl k = 27,1.

Unter der Prämisse, daß der Einfluß des Referenzwerts $V_T$ für die Berechnung eines neuen Referenzwertes $V_{Tn}$ nicht größer als 80 % werden soll, kann der neue Referenzwert wie folgt berechnet werden:

$$V_T = y*V_a + z*V_T,$$

wobei

$$z = 0,8*\left(\frac{k}{1+k}\right)^6$$

und

$$y = 1 - z.$$

Nach dieser Formel ergibt sich für z = 0,64; y = 0,36 und $V_{Tn}$ = 2,55 Volt.

Dieser Wert von 2,55 V, der die Nullage des Sensors bei 17°C definiert, kann jetzt für die Kalibrierung und die Skalierung des Winkelsensors verwendet werden. Ferner wird dieses neue Referenzsignal extrapoliert und es werden hieraus gewonnene Werte für die Temperaturen $T_i$ von 15°C und $T_{i+1}$ von 20°C abgespeichert. Die neuen Werte ergeben sich aus

$$V_{Ti} = \frac{V_{Ti}*V_{Tn}}{V_T} \quad und \quad V_{Ti-1} = \frac{V_{Ti+1}*V_{Tn}}{V_T}$$

mit 2,52 Volt und 2,58 Volt.

In ähnlicher Weise wird die Zahl der Speicheroperationen k, deren Wert aus $k_i$ und $k_{i+1}$ interpoliert worden war, um eins hochgezählt und wieder extrapoliert. Dies kann nach der folgenden Formel geschehen:

$$k_i = \frac{k_i(k+1)}{k} = und k_{i+1} \frac{k_{i+1}(k+1)}{k}$$

Obgleich die Erfindung zu den einzelnen Rechenschritten mit nur jeweils einem Algorithmus zu Veranschaulichungszwecken erläutert wurde, ist es offensichtlich, daß eine Vielzahl von Algorithmen eingesetzt werden können, um die Erfindung auszuführen und insbesondere ein selbstlernendes Verfahren zur Kalibrierung eines Winkelsensors bereitzustellen.

**Patentansprüche**

1. Verfahren zum Kalibrieren eines von der Betriebstemperatur (T) beeinflußten Winkelsensors (14) mit den Schritten:

   - ein Ausgangssignal ($V_a$) für die Nullage des Winkelsensors (14) wird ermittelt und eine zugehörige Betriebstemperatur (T) wird gemessen,
   - aus dem ermittelten Ausgangssignal ($V_a$) und einem für die gemessene Betriebstemperatur (T) gespeicherten Referenzsignal ($V_T$) für die Nullage wird ein neues Referenzsignal ($V_{Tn}$) für diese Temperatur gebildet und gespeichert,
   - die Anzahl der Speicherungen ($k_i$; $k_{i+1}$; ...; $k_{i+n}$) wird für jede Temperatur ($T_i$; $T_{i+1}$) festgehalten,
   - der Einfluß des für eine bestimmte Temperatur gespeicherten Referenzsignals ($V_T$) auf die Bildung des neuen Referenzsignals ($V_{Tn}$) wird von der Anzahl der zuvor stattgefundenen Speicherungen (k) des Referenzsignals ($V_T$) bestimmt,
   - die Nullage des Winkelsensors (14) wird durch das neue Referenzsignal ($V_{Tn}$) eingestellt.

2. Verfahren nach Anspruch 1, **dadurch gekennzeichnet, daß** Signale für die Nullage des Winkelsensors für eine Vielzahl von vordefinierten Temperaturen gespeichert werden, und daß für eine gemessene Betriebstemperatur (T) das Referenzsignal ($V_T$) aus einem Signal ($V_{Ti}$), das für eine Temperatur ($T_i$) gespeichert ist, die kleiner als die Betriebstemperatur (T) ist, und einem Signal ($V_{Ti+1}$) gebildet wird, das für eine Temperatur ($T_{i+1}$) gespeichert ist, die größer als die Betriebstemperatur (T) ist.

3. Verfahren nach dem vorhergehenden Anspruch 2, **dadurch gekennzeichnet, daß** das neu für die Betriebstemperatur (T) gebildete Referenzsignal ($V_{Tn}$) in ein Signal ($V_{Ti}$) für die Temperatur ($T_i$) und ein Signal ($V_{Ti+1}$) für die Temperatur ($T_{i+1}$) zurückgewandelt und gespeichert wird.

4. Verfahren nach einem der vorhergehenden Ansprüche, **dadurch gekennzeichnet, daß** ein Skalierungsfaktor für den Winkelsensor (14) in Abhängigkeit vom Referenzsignal ($V_T$) gebildet wird.

**5.** Verfahren nach einem der vorhergehenden Ansprüche, **dadurch gekennzeichnet, daß** der Winkelsensor (14) ein Gyroskop ist.

**6.** Verfahren nach einem der vorhergehenden Patentansprüche, **dadurch gekennzeichnet, daß** bei der Herstellung eines Navigationssystems (1) Signale ($V_{Ti}$) für die Nullage zu Temperaturen ($T_i$) gespeichert werden.

**7.** Navigationssystem mit einem Winkelsensor (14), einem Entfernungssensor (13), einer Recheneinheit (12) zur Bestimmung einer Position aus den Daten des Winkelsensors (14) und des Entfernungssensors (13), einem Temperatursensor (17) zur Messung der Betriebstemperatur (T) des Winkelsensors (14), einer in einem Speicher (11) abgelegten Tabelle (111), die Referenzsignale ($V_T$) als Kalibrierungswerte für die Nullage des Winkelsensors (14) für eine Vielzahl von vordefinierten Betriebstemperaturen (T) bereitstellt, wobei

- aus einem bei einer Betriebstemperatur (T) gemessenen Ausgangssignal für die Nullage ($V_a$) und dem Referenzsignal ($V_T$) ein neues Referenzsignal ($V_{Tn}$) für diese Betriebstemperatur (T) erzeugbar ist,
- für die gemessene Betriebstemperatur (T) das Referenzsignal ($V_T$) erzeugbar ist, aus einem Signal ($V_{Ti}$), das für eine Temperatur ($T_i$) gespeichert ist, die kleiner als die Betriebstemperatur (T) ist, und einem Signal ($V_{Ti+1}$) das für eine Temperatur ($T_{i+1}$) gespeichert ist, die größer als die Betriebstemperatur (T) ist, und wobei
- die Recheneinheit (12) das neu für die Betriebstemperatur (T) gebildete Referenzsignal ($V_{Tn}$) in ein Signal ($V_{T1}$) für die Temperatur ($T_1$) und ein Signal ($V_{Ti+1}$) für die Temperatur ($T_{i+1}$) zurückwandelt und speichert.

**Claims**

**1.** Method for calibrating an angle sensor (14) which is influenced by the operating temperature (T), having the following steps:

- an output signal ($V_a$) for the zero point of the angle sensor (14) is ascertained and an associated operating temperature (T) is measured,
- the ascertained output signal ($V_a$) and a reference signal ($V_T$), stored for the measured operating temperature (T), for the zero point are used to form a new reference signal ($V_{Tn}$) for this temperature, and this new reference signal is stored,
- the number of storage operations ($k_i$; $k_{i+1}$: ...;

$k_{i+n}$) is recorded for each temperature ($T_i$; $T_{i+1}$),
- the influence of the reference signal ($V_T$) stored for a particular temperature on the formation of the new reference signal ($V_{Tn}$) is determined by the number of previous storage operations (k) which have taken place for the reference signal ($V_T$),
- the zero point of the angle sensor (14) is set using the new reference signal ($V_{Tn}$).

**2.** Method according to Claim 1, **characterized in that** signals for the zero point of the angle sensor are stored for a multiplicity of predefined temperatures, and **in that**, for a measured operating temperature (T), the reference signal ($V_T$) is formed from a signal ($V_{Ti}$) stored for a temperature ($T_i$) which is lower than the operating temperature (T) and from a signal ($V_{Ti+1}$) stored for a temperature ($T_{i+1}$) which is higher than the operating temperature (T).

**3.** Method according to the preceding claim 2, **characterized in that** the new reference signal ($V_{Tn}$) formed for the operating temperature (T) is converted back into a signal ($V_{Ti}$) for the temperature ($T_i$) and a signal ($V_{Ti+1}$) for the temperature ($T_{i+1}$) and is stored.

**4.** Method according to one of the preceding claims, **characterized in that** a scaling factor for the angle sensor (14) is formed on the basis of the reference signal ($V_T$).

**5.** Method according to one of the preceding claims, **characterized in that** the angle sensor (14) is a gyroscope.

**6.** Method according to one of the preceding patent claims, **characterized in that** signals ($V_{Ti}$) for the zero point at temperatures ($T_i$) are stored when a navigation system (1) is manufactured.

**7.** Navigation system having an angle sensor (14), a distance sensor (13), a processor (12) for determining a position from the data from the angle sensor (14) and from the distance sensor (13), a temperature sensor (17) for measuring the operating temperature (T) of the angle sensor (14), a table (111), stored in a memory (11), which provides the reference signals ($V_T$) as calibration values for the zero point of the angle sensor (14) for a multiplicity of predefined operating temperatures (T), where

- an output signal, measured at an operating temperature (T), for the zero point ($V_a$) and the reference signal ($V_T$) can be used to produce a new reference signal ($V_{Tn}$) for this operating temperature (T),
- for the measured operating temperature (T), the reference signal ($V_T$) can be produced from a signal ($V_{Ti}$) stored for a temperature ($T_i$) which is lower than the operating temperature (T) and from a signal ($V_{Ti+1}$) stored for a temperature ($T_{i+1}$) which is higher than the operating temperature (T), and where

- the processor (12) converts the new reference signal ($V_{Tn}$) formed for the operating temperature (T) back into a signal ($V_{Ti}$) for the temperature ($T_i$) and a signal ($V_{Ti+1}$) for the temperature ($T_{i+1}$) and stores it.

## Revendications

1. Procédé d'étalonnage d'un capteur d'angle (14) influencé par la température de service (T), comprenant les étapes dans lesquelles :

   - un signal de sortie ($V_a$) pour la position zéro du capteur d'angle (14) est déterminé et une température de service (T) correspondante est mesurée,
   - à partir du signal de sortie ($V_a$) déterminé et d'un signal de référence ($V_T$) pour la position zéro, enregistré pour la température de service (T) mesurée, un nouveau signal de référence ($V_{Tn}$) est formé pour cette température et enregistré,
   - le nombre d'enregistrements ($k_i$; $k_{i+1}$; ...; $k_{i+n}$) est consigné pour chaque température ($T_i$; $T_{i+1}$),
   - l'influence du signal de référence ($V_T$) enregistré pour une température déterminée sur la formation du nouveau signal de référence ($V_{Tn}$) est déterminée par le nombre d'enregistrements ($k$) du signal de référence ($V_T$) ayant eu lieu auparavant,
   - la position zéro du capteur d'angle (14) est réglée au moyen du nouveau signal de référence ($V_{Tn}$).

2. Procédé selon la revendication 1, **caractérisé en ce que** l'on enregistre des signaux pour la position zéro du capteur d'angle pour une pluralité de températures prédéfinies et **en ce que**, pour une température de service (T) mesurée, on forme le signal de référence ($V_T$) à partir d'un signal ($V_{Ti}$) enregistré pour une température ($T_i$) inférieure à la température de service (T) et d'un signal ($V_{Ti+1}$) enregistré pour une température ($T_{i+1}$) supérieure à la température de service (T).

3. Procédé selon la revendication 2 précédente, **caractérisé en ce que** le signal de référence ($V_{Tn}$) nouvellement formé pour la température de service (T) est reconverti en un signal ($V_{Ti}$) pour la température ($T_i$) et un signal ($V_{Ti+1}$) pour la température ($T_{i+1}$) et enregistré.

4. Procédé selon l'une des revendications précédentes, **caractérisé en ce qu'**un facteur de cadrage pour le capteur d'angle (14) est formé en fonction du signal de référence ($V_T$).

5. Procédé selon l'une des revendications précédentes, **caractérisé en ce que** le capteur d'angle (14) est un gyroscope.

6. Procédé selon l'une des revendications précédentes, **caractérisé en ce que** des signaux ($V_{Ti}$) pour la position zéro sont enregistrés relativement à des températures ($T_i$) lors de la fabrication d'un système de navigation (1).

7. Système de navigation comprenant un capteur d'angle (14), un capteur de distance (13), une unité de calcul (12) servant à déterminer une position à partir des données du capteur d'angle (14) et du capteur de distance (13), un capteur de température (17) servant à mesurer la température de service (T) du capteur d'angle (14), une table (111) déposée dans une mémoire (11 ) qui met à disposition des signaux de référence ($V_T$) en tant que valeurs d'étalonnage pour la position zéro du capteur d'angle (14) pour une pluralité de températures de service (T) prédéfinies,

   - un nouveau signal de référence ($V_{Tn}$) pouvant être produit pour une température de service (T) à partir d'un signal de sortie pour la position zéro ($V_a$) mesuré pour cette température de service (T) et du signal de référence ($V_T$),
   - le signal de référence ($V_T$) pouvant être produit, pour la température de service (T) mesurée, à partir d'un signal ($V_{Ti}$) enregistré pour une température ($T_i$) i nférieure à la température de service (T) et d'un signal ($V_{Ti+1}$) enregistré pour une température ($T_{i+1}$) supérieure à la température de service (T), et
   - l'unité de calcul (12) reconvertissant le signal de référence ($V_{Tn}$) nouvellement formé pour la température de service (T) en un signal ($V_{Ti}$) pour la température ($T_i$) et un signal ($V_{Ti+1}$) pour la température ($T_{i+1}$) et l'enregistrant.

**Fig. 1**

**Fig. 2**